# EUROPEAN PATENT APPLICATION

(11) **EP 1 775 893 A1**
(43) Date of publication of application: **18.04.2007**
(21) Application number: 05792011.8
(22) Date of filing: 29.09.2005
(51) Int. Cl.: H04L 12/56

(54) **A METHOD FOR ENSURING THE QUALITY OF END-TO-END SERVICE**

(30) Priority: 29.09.2004 CN 200410080400
(71) Applicant: Huawei Technologies Co., Ltd., Longgang District, Shenzhen Guangdong 518129 (CN)
(72) Inventor: HE, Yungu, Shenzhen,Guangdong 518129 (CN); ZOU, Ting, Shenzhen,Guangdong 518129 (CN)
(74) Representative: Manitz, Finsterwald & Partner GbR
(86) International application number: PCT/CN2005/001601
(87) International publication number: WO 2006/034651

(57) **Abstract**

Embodiments of the present invention disclose a method for guaranteeing end-to-end Quality of Service (QoS), including: establishing in advance a corresponding logic bearer layer for each network, and storing information of the logic bearer layer in a bearer control entity of the bearer control layer of each network; initiating a service request from a first user terminal to a first network, requiring to set up a service session with a second user terminal of a second network; both the bearer control entities of the first network and the second network allocating service paths and bandwidth resources within logic bearer layers and upon boundary exits of their own, respectively; based on the paths allocated by the bearer control entities of the first network and the second network, transmitting service stream between the logic bearer layers of these two networks. Therefore, the operator can hide its own network topology without communication failure caused by the distrust between operators, and thus, networks of different operators can be safely connected.

## Description

### Field of the Invention

The invention relates to end-to-end Quality of Service (QoS) control techniques, and especially to a method to guarantee end-to-end QoS.

### Background of the Invention

Along with the continuous growth of the Internet, various network services appear, and advanced multimedia systems emerge in endlessly. Since real-time services are relatively sensitive to network characteristics such as transmission latency, delay jitter etc., when there are FTP services of high burstiness, or HTTP services with image files on the network, the real-time services may be greatly affected. Besides, since multimedia services may occupy lots of bandwidths, key services, which require to be guaranteed in the existing network, can not be reliably transmitted. Therefore, in order to guarantee reliable transmission of key services, various QoS technologies arise. The Internet Engineering Task Force (IETF) has proposed a good many service models and mechanisms to satisfy the requirements of QoS. At present, a scheme, which adopts an Integrated Service (INT-SERV) model on the access or edge portion of a network, and adopts a Differentiated Service (DIFF-SERV) model on the core portion of the network, is comparatively approved in the art.

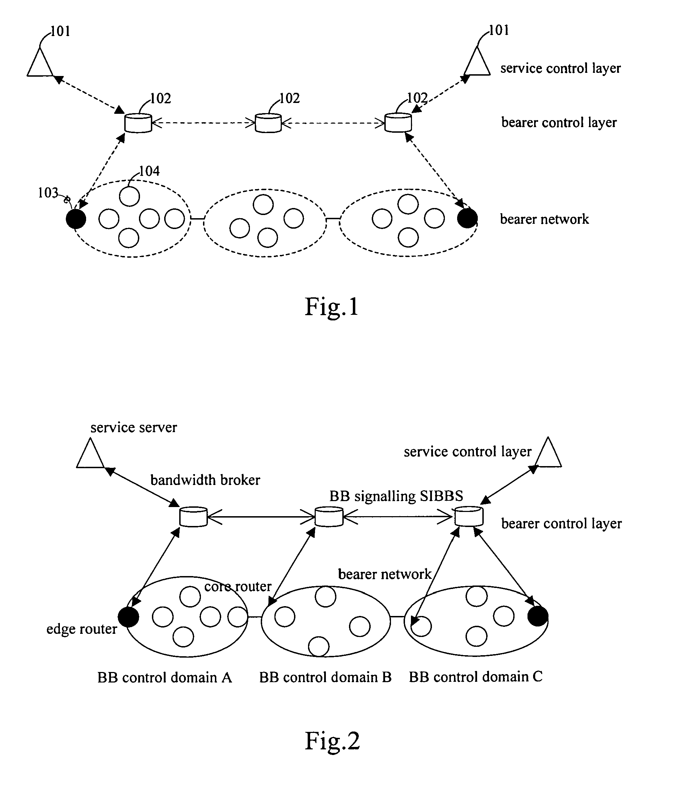

In the Diff-serv model, only a measure of setting priority levels is provided to guarantee the QoS. Although this model has a feature of high line efficiency, the real effort is unpredictable. Therefore, an independent bearer control layer is introduced into the Diff-serv Model of the backbone network in the art, a special set of Diff-serv QoS signaling mechanisms are provided, and also a resource management layer is specially established for the Diff-serv network, which is used for managing topology resources of the network. This Diff-serv mode of resource management is called a Diff-serv model with an independent bearer control layer. Figure 1 is a schematic diagram of the model. Here, the 101 is a service server, such as a Call Agent (CA), which belongs to the service control layer for implementing functions such as soft switch; the 102 is a logic bearer network resource manager, which belongs to the bearer control layer; the 103 is an Edge Router (ER) and the 104 is a Core Router, which all belong to the logic bearer layer. In this model, the logic bearer network resource manager is responsible for configuring management policies and network topology, allocating resources for service bandwidth applications of customers. The service bandwidth application requests and results of customers, and the path information of service applications, etc., which are allocated by every logic bearer network resource manager, are delivered via signaling between logic bearer network resource managers of every control domain.

When processing a service bandwidth application request from a user, the bearer control layer will assign a path for the service, and then the logic bearer network resource manager will inform the ER to forward the service stream according to the assigned path. How could the logic bearer layer transfer the service stream with reference to the path assigned by the bearer control layer? At present, an existing approach in the art is to use the Multi-protocol Label Switching (MPLS) technique, and with a resource reservation mode, establish a Label Switched Path (LSP) along the service stream path assigned by the bearer control layer, where the end-to-end LSP is set up by using explicit routing mechanisms, such as the RSVP-TE or the CR-LDP.

The method of determining an end-to-end logic path according to network topology works well within networks of one operator. Nevertheless, when there exist different operators, or when networks with heterogeneous structure are connected, for example, a network with an independent bearer control layer is connected with another network without the layer, the end-to-end logic path is hard to determine according to this method. Theoretically speaking, the method can be active between different operators. However, since operators don't want to reveal path information of their own to others due to trust risk, this method cannot be directly applied in the cases when there exist different operators, or networks with heterogeneous structure are connected, and thus improvement is needed.

In addition, a main solution for guaranteeing QoS between different operators is to sign the Service Level Agreement (SLA) between these operators. Then, each operator may take measures, in accordance with the SLA, to ensure the QoS within its own network. Generally, traditional schemes such as the Diff-serv and the MPLS-VPN are applied. For the Diff-serv scheme, services are roughly classified into different levels, and a corresponding service priority is set in the DSCP field of IP packets according to the level of a service, then routers will forward the packets based on this priority.

This traditional Diff-Serv approach could only guarantee the QoS ability of services in some cases. Since a conventional routing mode is adopted in this Diff-Serv approach, which lacks CAC/SAC, when there is high traffic or an instant attack on the network, the QoS will be obviously declined, and thus, the service QoS required by customers could not be guaranteed.

Figure 2 illustrates a model of QBone bandwidth broker, which is another Diff-serv model with an independent bearer control layer. As shown in figure 2, bandwidth brokers are set for each Diff-Serv control domain in the Internet, which can deal with bandwidth application requests coming from users' host machines, service servers or network operating staffs. Moreover, a bandwidth broker can determine whether a bandwidth application is permitted according to current reservation situation of network resources, configured policies and service SLAs subscribed by users. The bandwidth broker may keep a great deal of static or dynamic information, including: various SLA configuration information, network physical topology information, configuration and strategy information of routers, identification information of users, current resource reservation information and network occupation status information etc. At the same time, the bandwidth broker may record routing information in order to determine service stream paths and locations of cross-domain downward bandwidth brokers for users. In this Internet 2 model, the bandwidth broker may directly control resource and configuration information of all routers in its dominated area, so the network topology is complicated to manage. Besides, since the bandwidth broker needs to record dynamic routing information of its dominated area, the routing table may be updated frequently, the resource reservation is unstable, and the service path designated by the bandwidth broker may be inconsistent with the real forwarding path of the service stream. Since there are many implementation problems, the bandwidth broker has not been put into commercial use up to now.

In the networking mode of figure 2, the logic bearer layer controlled by the QoS server, which includes a lot of routers, is still complicated. Although service control is implemented, due to the lack of reliability design and the multi-home characteristic of key nodes, the network is of low scalability, and the scope is limited. Thus, it could not meet end-to-end service requirements of a national public network.

On the whole, when a logic path, such as an LSP, is adopted as a service stream path in a network with an independent bearer control layer or a central resource control layer, it is necessary to send downward the whole end-to-end path information to a source edge router when transferring stream mapping and policy configuration information. When implementing interconnection between operators, it is unacceptable for an operator to tell path information of its own to others. Furthermore, since there is trust risk between operators, intermediate Resource Managers (RM) could not interact with the service layer or management layer. In this case, a cheat or attack to other operators may happen during interworking of operators, for example, though operator A has applied for a bandwidth from operator B, a narrower bandwidth is used for transferring data of operator A in the network of operator B, so the communication quality for users of operator A is greatly affected, which needs remedy actions.

### Summary

The embodiment of the present invention provides a method for guaranteeing end-to-end QoS, which could guarantee QoS of services between two different operator networks without disclosing network topology structure of one operator to the other.

A method for guaranteeing end-to-end Quality of Service (QoS), which is applied on at least two networks each of which includes an independent bearer control layer, including: establishing in advance a corresponding logic bearer layer for each network, and storing information of the logic bearer layer in bearer control entities of the bearer control layer of each network;
and the method further includes:
a. initiating a service request from a first user terminal to a first network, requiring to set up a service session with a second user terminal of a second network;
b. according to source user location, destination user location and the QoS parameters, both the bearer control entities of the first network and the second network allocating service paths and bandwidth resources within the logic bearer layers and upon the boundary exits of their own, respectively;
c. based on the paths allocated by the bearer control entities of the first network and the second network, transmitting service stream upon the logic bearer layers of these two networks.

Both the service control layers of the first network and the second network include a boundary service control entity; and Step a includes:
a11. after receiving the service request from the first user terminal, a service control entity of the first network obtaining the source user location, the destination user location and the QoS parameters of this service, and according to the received service request, initiating a resource request to the bearer control entity of the first network, and sending the service request to a service control entity of the second network through the boundary service control entities of the first network and the second network;
a12. after receiving the service request, the service control entity of the second network obtaining the source user location, the destination user location and the QoS parameters of this service according to the received service request, and sending a resource request to the bearer control entity of the second network.

The Step b includes:
b11. the bearer control entities of both the first network and the second network judging whether the bandwidth resources within their own networks and upon the boundary exits are enough for the service, respectively; if said bandwidth resources are enough, performing bandwidth reservation for the service in each network, and based on the source user location, the destination user location and the QoS parameters, allocating paths within their own networks and upon the boundary exits for the service, and then forwarding to Step c; otherwise, determining that the service fails, and ending the procedure.

The Step a includes:
a21. after receiving the service request from the first user terminal, the service control entity of the first network obtaining the source user location, the destination user location and the QoS parameters of this service according to the service request, and sending a resource request to a bearer control entity of the first network.

The two gateway bearer control entities respectively situated in the bearer control layers of the first network and the second network are directly interconnected; and Step b includes:
b21. after receiving the resource request, the bearer control entities of the first network judging whether resources of its network are enough; if they are, based on the source user location, the destination user location and the QoS parameters, allocating the path and the bandwidth resources within its own network and upon the boundary exit for the service, and then executing Step b22; otherwise, determining that the service fails, and ending the procedure;
b22. sending a resource request from the bearer control entity of the first network to a bearer control entity of the second network;
b23. after receiving the resource request, the bearer control entities of the second network allocating the path and the bandwidth resources within its own network and upon the boundary exit for the service, based on the source user location, the destination user location and the QoS parameters.

The method further includes: based on the bandwidth resources of their own networks allocated for the service, the bearer control entities of both the first network and the second network carrying out charging for the service, respectively.

The method further includes: having accomplished path selection within its own network, the bearer control entities reporting charging-related information to their corresponding service control entity; and
the method further includes: the service control entity carrying out charging for the service.

The boundary gateway of the logic bearer layer performs stream mapping, and limits the access rate for steam from the outside according to demand.

In this invention, an independent bearer control layer is introduced into networks of different operators, which could interconnect with each other via gateway bearer control entities. Through planning and configuring logic bearer topology within the network, the operator of each network can plan interior logic paths, configure boundary gateways for bearing interconnection, and designate gateway bearer control entities to control the interconnection of boundary gateways, and the logic path between two networks is established via negotiation of the operators. When a first user terminal initiates a service request to the first network, for setting up a service session with a second user terminal of the second network, both the bearer control entities of the first network and the second network allocate logic paths and bandwidth resources for the service within their own networks, respectively, based on source user location, destination user location and the QoS parameters. Later, the service stream will be forwarded on the service logic bearer layers of those two networks according to the allocated paths. Therefore, with the help of the invention, the operator can hide its own network topology without communication failure caused by the distrust between operators, and thus, networks of different operators can be safely connected.

### Brief Description of the Drawings

Figure 1 shows a network model with an independent bearer control layer in prior art;
Figure 2 is a schematic diagram of SIBBS signaling between bandwidth brokers of Internet 2;
Figure 3 is a networking diagram applied in an embodiment of this invention;
Figure 4 is a flowchart illustrating the specific procedure of the method of the invention.

### Embodiments of the Invention

In order to make the object, technical scheme and merits clearer, the invention will be further described hereinafter in detail with reference to drawings.

In embodiments of the present invention, a first network and a second network, both of which include an independent bearer control layer, and belong to two different operators. These two networks can interconnect with each other via gateway bearer control entities. Through planning and configuring logic bearer topology within the network, the operator of each network can plan interior logic paths, such as LSPs, configure boundary gateways for bearing interconnection, and designate gateway bearer control entities to control the interconnection of boundary gateways. The gateway bearer control entities may authenticate each other, for example, configure the address and authentication identifier of the partner, perform authentication when setting up a connection. Here, the connection could be set up only when the authentication is passed.

The main idea of this invention is: when a first user terminal initiates a service request to a service control entity of the first network to ask for a service session with a second user terminal of the second network, both the bearer control entities of the first network and the second network, based on the source user location, the destination user location and the QoS parameters, allocate logic paths and bandwidth resources within their own networks for this service, respectively; later, the service stream may be transferred in the service bearer logic networks of these two networks according to the paths allocated by the bearer control layers of the first network and the second network, and also, the service stream may be forwarded between the networks according to the paths allocated through interaction and negotiation of the gateway bearer control entities of these two networks. Here, the logic path could be an LSP, a PVC/SVC of ATM/FR, a traditional IP route, or a combination of one or more of them.

Since the first network and the second network belong to two different operators, the service stream between the first user terminal and the second user terminal requires to be born together by the first network and the second network. Each network defines the QoS parameters and the path for the service stream within its domain, and thus it is unnecessary for any one of the first network and the second network to provide its topology information to the other. It is only needed for each network to inform its logic path information of this service stream to the beginning edge router or the boundary gateway router of itself.

In practice, operators, which are totally trusted and opened, only need to sign a Service Level Agreement (SLA), without executing procedures of path hiding and stream re-classifying at the boundary, or only executing parts of the procedures. For example, suppose that there is a session/calling from operator B to operator A, responsibility for operator A recorded in the SLA may include: needing to process QoS requests initiated by operator B; aiming at a session/calling, announcing available QoS parameters and resources of itself to operator B; executing QoS parameters agreed in its domain. Responsibility for operator B recorded in the SLA may include: initiating a suitable QoS request according to users' service condition; executing QoS parameters agreed in its domain. For a session/calling from operator A to operator B, the above mentioned contents of SLA are exchanged for operators A and B.

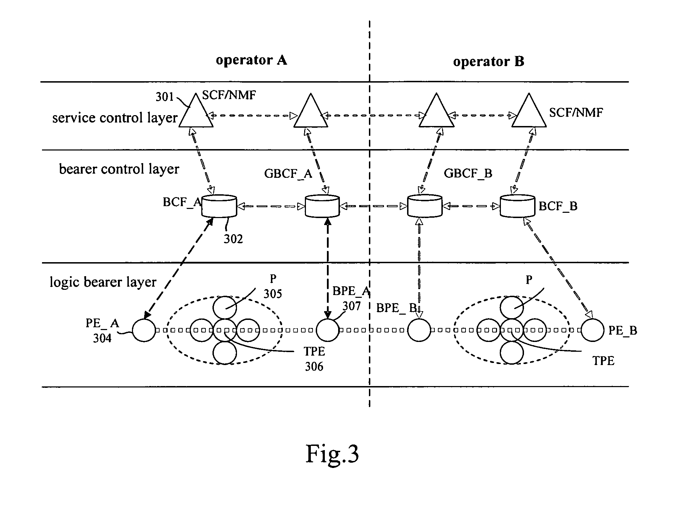

Figure 3 shows a networking diagram of an embodiment of the invention. As shown in this diagram, the network applied in this embodiment includes: a service control layer, a bearer control layer and a logic bearer layer. Here, the service control layer includes service control entities, specifically Service Control Function/Network Management Function (SCF/NMF) entities 301. The bearer control layer includes bearer control entities, specifically Bearer Control Function (BCF) entities 302 and Gateway Bearer Control Function (GBCF) entities 303. The logic bearer layer includes Boundary Provider Edge (BPE) routers 307, Provider Edge (PE) routers 304, Provider core routers (P) 305 and Traffic Provider routers (TPE) 306. The BCF cited here is a same entity as the Resource Manager (RM) of prior art, which are two different names for one logic function entity. Also, the GBCF can be called Boundary Bearer Control Function (BBCF), which is connected with the service control entities, the network management entities and the QoS management entities of the network.

In figure 3, the left-hand side of the dotted line is a network of operator A, namely a first network, which will be called network A hereinafter; and the right-hand side of the dotted line is a network of operator B, namely a second network, which will be called network B hereinafter. The GBCF_A in network A controls the BPE_A, and the GBCF_B in network B controls the BPE_B. The interworking between network A and network B is realized through the GBCF_A and the GBCF_B, and logic paths of these two networks can be connected after the BPE_A and the BPE_B are connected.

Practically, when there is an interconnection between boundary service control entities of the service control layers of these two networks, for example, when the service control entity is a CA, parts of the interconnection functions of the GBCF can be embedded in this service control entity. In this case, a direct interconnection between the GBCFs is not needed, i.e., the QoS request is transferred by two service control entities SCF_A and SCF_B of these two networks, and then the SCF_B sends a resource request to the GBCF_B, which may select a path and carry out resource reservation for the service request in its own network. Specifically, the processing procedure of this case is as follows: having received a service request requiring guaranteed QoS from a user, the SCF of the first network obtains the source user location, the destination user location and the QoS parameters of this service according to the service request, sends a resource request to the bearer control entity, i.e., the BCF_A, of this network, and also sends a service request to the SCF of the second network through a boundary service control entity. Having received the service request, the SCF of the second network obtains the source user location, the destination user location and the QoS parameters of this service according to the service request, and sends the resource request to the GBCF_B. Both the bearer control entities of the first and the second networks, which have received the resource request, determine whether the bandwidth resources within its own network and upon the boundary exit are enough, respectively, if they are enough, perform bandwidth reservation for this service, and allocate a path within the network and upon the boundary exit based on the source user location, the destination user location and the QoS parameters; otherwise, the service request fails.

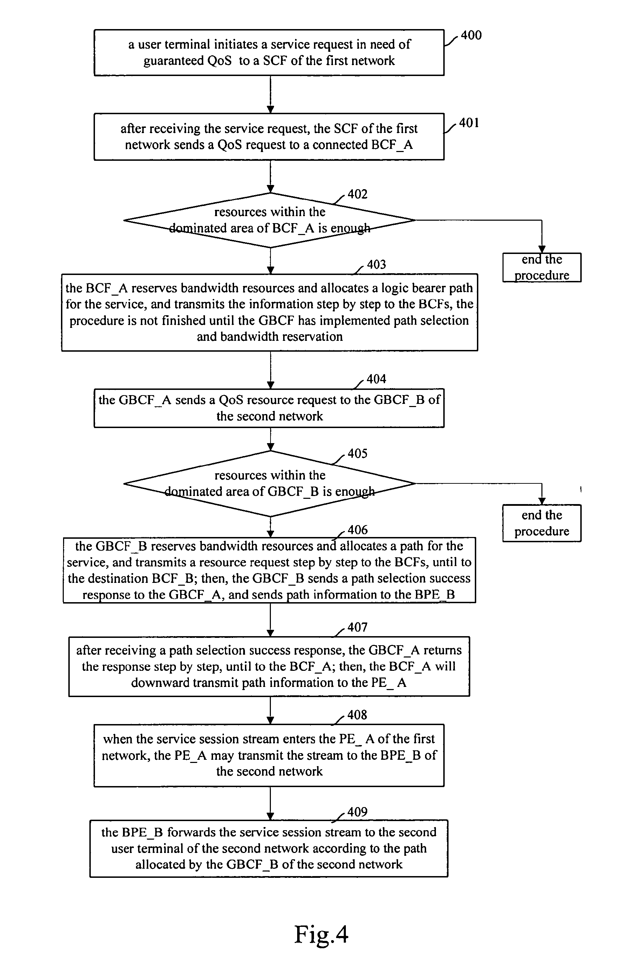

In the following, the method of the invention is described by taking the interconnection of the GBCF_A and the GBCF_B as an example. Referring to Figure 4, the procedure of this embodiment includes the following steps:
Step 400: A first user terminal sends a service request with QoS guaranteed requirement to the SCF of the first network, asking for a session with a second user terminal in the second network.
With regard to a bi-directional service stream, allocation of the upstream is illustrated in detail at the following steps, whereas allocation of the downstream is just the opposite.
Step 401: Having received the service request from the first terminal, the SCF of the first network obtains source user location, destination user location, and the QoS parameters of this service from the service request, and then sends a QoS request to a connected BCF.
   Here, according to the service request of the user, the SCF determines parameters of this service, which are QoS parameters, and the IP 5-tuple involving source IP address, destination IP address, protocol number, source port number and destination port number, and generates a QoS request command, which includes the QoS parameters and the IP 5-tuple.
Step 402: Having received the QoS resource request, the BCF_A determines whether there are adequate resources in its control domain, if there are, executes Step 403; otherwise, determines that the service request fails, and end the procedure.
Steps 403~404: The BCF_A performs bandwidth resource reservation for the service, and allocates a path within the logic bearer layer corresponding to the network A for this service according to the source user location, the destination user location and the service type, and forwards the QoS request step by step to downward BCFs. When the path within the network and upon the boundary exit is selected, and the resources are reserved for the service, the GBCF_A will send the QoS resource request of the user to the GBCF_B of the second network.
Step 405: Having received the QoS resource request, the GBCF_B determines whether there are adequate resources in its control domain, if there are, executes Step 406; otherwise, determines that the service request fails, and end the procedure.
Step 406: The GBCF_B carries out bandwidth resource reservation for this service, and based on the source user location, the destination user location and the service type, the GBCF_B allocates a path on the logic bearer layer of the network B for this service, and then transmits the resource request downward to the BCFs on the path step by step, until to the destination BCF. That is, the BCF_B has finished bandwidth reservation and path selection for this service. Afterwards, the GBCF_B sends a path selection success response to the GBCF_A, and informs the BPE_B of the path information including information of stream mapping, gating and other policy configuration, where the path is from the BPE_B to the exit port. Before the service stream is forwarded, the BPE_B needs to re-classify the ingress stream, set a Committed Access Rate (CAR) limiting, and execute functions such as gating, label mapping and packet forwarding, etc.
Step 407: Having received the path selection success response, the GBCF_A returns a response message to the BCFs step by step, until to the BCF_A. Then, the BCF_A will inform the PE_A the path information of stream mapping and policy configuration, where the path is from the PE_A to the BPE_A.
Steps 408~409: When the service session stream from the first user terminal enters the PE_A of the first network, the PE_A forwards this service session stream to the BPE_B of the second network according to the path and the bandwidth resources allocated by the first network. Then, the BPE_B forwards the service session stream to a second user terminal of the second network according to the path and the bandwidth resources allocated by the GBCF_B of the second network. Here, the initiating edge router of the logic bearer layer of the first network implements stream mapping and Committed Access Rate (CAR) limiting according to the demand, and the boundary gateway of the logic bearer layer of the second network, i.e., the BPE_B, needs to implement stream mapping and CAR limiting again.

Moreover, when the GBCF has finished path selection within the network, the QoS parameters and the result information will be reported to a corresponding service control entity, a network management entity or a QoS management entity to carry out charging for this service. The charging will not be stopped until the first user terminal and the second user terminal are disconnected. If none of the above entities exist in the network, or these entities can not realize functions related to session charging, the GBCF itself needs to implement session functions such as QoS charging or charging information recording. Here, the charging information, which could be used when calculating fees between operators, includes the QoS parameters of the application, the session identifier, stream information, time section and duration etc.

It has been seen from the above procedure that when user A of operator A initiates a session to user B of operator B through an interaction at the service control layer, the QoS resource request is downward transmitted to the bearer control layer; and after implementing resource path selection within the operator or upon the boundary exit at the bearer control layer, a QoS resource request is proposed to another operator through the GBCF. For an upward path from the user A to the user B, the GBCF_A initiates a resource request to the GBCF_B after an out path of the boundary router (BPE or BR) is chosen; and after finishing path selection within operator B for the session, the GBCF_B returns information of path selection success or fail. In the case of path selection success, the GBCF_B only tells the GBCF_A result of success, without the path allocated by the GBCF_B itself, so that network topology between operators could be hidden. As to a downward path, the procedure is in contrast.

To sum up, what has mentioned above is only embodiments of the invention, and it is not to limit the protection scope of the invention.

## Claims

1. A method for guaranteeing end-to-end Quality of Service (QoS), which is applied on at least two networks each of which comprises an independent bearer control layer, comprising: establishing in advance a corresponding logic bearer layer for each network, and storing information of the logic bearer layer in bearer control entities of the bearer control layer of each network;
and further comprising:
a. initiating a service request from a first user terminal to a first network, requiring to set up a service session with a second user terminal of a second network;
b. according to source user location, destination user location and the QoS parameters, both the bearer control entities of the first network and the second network allocating service paths and bandwidth resources within the logic bearer layers and upon the boundary exits of their own, respectively;
c. based on the paths allocated by the bearer control entities of the first network and the second network, transmitting service stream upon the logic bearer layers of these two networks.

2. The method according to Claim 1, wherein both the service control layers of the first network and the second network comprise a boundary service control entity; and Step a comprises:
a11. after receiving the service request from the first user terminal, a service control entity of the first network obtaining the source user location, the destination user location and the QoS parameters of this service, and according to the received service request, initiating a resource request to the bearer control entity of the first network, and sending the service request to a service control entity of the second network through the boundary service control entities of the first network and the second network;
a12. after receiving the service request, the service control entity of the second network obtaining the source user location, the destination user location and the QoS parameters of this service according to the received service request, and sending a resource request to the bearer control entity of the second network.

3. The method according to Claim 2, wherein Step b comprises:
b11. the bearer control entities of both the first network and the second network judging whether the bandwidth resources within their own networks and upon the boundary exits are enough for the service, respectively; if said bandwidth resources are enough, performing bandwidth reservation for the service in each network, and based on the source user location, the destination user location and the QoS parameters, allocating paths within their own networks and upon the boundary exits for the service, and then forwarding to Step c; otherwise, determining that the service fails, and ending the procedure.

4. The method according to Claim 1, wherein Step a comprises:
a21. after receiving the service request from the first user terminal, the service control entity of the first network obtaining the source user location, the destination user location and the QoS parameters of this service according to the service request, and sending a resource request to a bearer control entity of the first network.

5. The method according to Claim 4, wherein two gateway bearer control entities respectively situated in the bearer control layers of the first network and the second network are directly interconnected; and Step b comprises:
b21. after receiving the resource request, the bearer control entities of the first network judging whether resources of its network are enough; if they are, based on the source user location, the destination user location and the QoS parameters, allocating the path and the bandwidth resources within its own network and upon the boundary exit for the service, and then executing Step b22; otherwise, determining that the service fails, and ending the procedure;
b22. sending a resource request from the bearer control entity of the first network to a bearer control entity of the second network;
b23. after receiving the resource request, the bearer control entities of the second network allocating the path and the bandwidth resources within its own network and upon the boundary exit for the service, based on the source user location, the destination user location and the QoS parameters.

6. The method according to Claim 1, further comprising: based on the bandwidth resources of their own networks allocated for the service, the bearer control entities of both the first network and the second network carrying out charging for the service, respectively.

7. The method according to Claim 1, further comprising: having accomplished path selection within its own network, the bearer control entities reporting charging-related information to their corresponding service control entity; and
the method further comprises: the service control entity carrying out charging for the service.

8. The method according to Claim 1, wherein the boundary gateway of the logic bearer layer performs stream mapping, and limits the access rate for steam from the outside according to demand.
